(19) Europäisches Patentamt
European Patent Office
Office européen des brevets

(11) Veröffentlichungsnummer : **0 035 096**
**B2**

(12) # NEUE EUROPÄISCHE PATENTSCHRIFT

(45) Veröffentlichungstag der neuen Patentschrift : **28.05.86**

(51) Int. Cl.[4] : **B 27 K 3/52**, A 01 N 25/04

(21) Anmeldenummer : **81100207.0**

(22) Anmeldetag : **14.01.81**

(54) **Holzschutzmittelkonzentrat und daraus hergestelltes Mittel zum Konservieren von Holz und Holzwerkstoffen.**

(30) Priorität : **06.02.80 DE 3004249**

(43) Veröffentlichungstag der Anmeldung : **09.09.81 Patentblatt 81/36**

(45) Bekanntmachung des Hinweises auf die Patenterteilung : **08.06.83 Patentblatt 83/23**

(45) Bekanntmachung des Hinweises auf die Entscheidung über den Einspruch : **28.05.86 Patentblatt 86/22**

(84) Benannte Vertragsstaaten :
**AT BE CH DE FR GB IT LI LU NL SE**

(56) *Entgegenhaltungen :*
**EP-A- 0 022 900**
**DE-A- 2 328 192**
**DE-A- 2 351 188**
**DE-A- 2 411 016**
**DE-A- 2 518 416**
**DE-A- 2 555 984**
**DE-B- 1 042 945**
**GB-A- 815 510**
**GB-A- 1 220 281**
**US-A- 2 544 732**

(73) Patentinhaber : **Desowag-Bayer Holzschutz GmbH.**
**Ross-Strasse 76**
**D-4000 Düsseldorf 1 (DE)**

(72) Erfinder : **Metzner, Wolfgang, Dr. Dipl.-Chem.**
**Buschstrasse 151**
**D-4150 Krefeld (DE)**
Erfinder : **Buchwald, Gustav, Dr. Dipl.-Chem.**
**Bodelschwinghstrasse 22**
**D-4150 Krefeld (DE)**

(74) *Vertreter :* ***Seiler, Siegfried***
**DEUTSCHE SOLVAY WERKE GmbH Langhansstrasse 6**
**D-5650 Solingen 11 (DE)**

EP 0 035 096 B2

**Beschreibung**

Die vorliegende Erfindung betrifft ein Holzschutzmittelkonzentrat (und daraus hergestelltes Mittel zum Konservieren von Holz und Holzwerkstoffen) bestehend aus bestimmten Gewichtsteilen eines schwerflüchtigen wasserunlöslichen, organisch-chemischen Lösungsmittels (gemisches), eines wasserunlöslichen Insektizids (gemisches) und/oder eines wasserunlöslichen Insektizids (gemisches) und/oder eines wasserunlöslichen Fungizids (gemisches), eines nichtionogenen Emulgators (gemisches) und einem wasserlöslichen kationischen Netzmittel (gemisch) und ggfs. Wasser.

Aus der GB-S 815 510 sind bereits emulgierende Konzentrate bekannt, die eine biologisch aktive Substanz enthalten. Diese Konzentrate, die eine flüchtige organische Flüssigkeit, einen Anteil an Emulgiermitteln sowie biologisch aktive Substanzen als Pflanzenwachstumreguliermittel enthalten, dienen zur Anwendung in der Land- und Gartenwirtschaft zur Regelung des Pflanzenwachstums einschliesslich der Schädlingsbekämpfung. Bei Pflanzenschutzmitteln und Holzkonservierungsmitteln bestehen jedoch unterschiedliche Aufgaben und Zielsetzungen. Bei dem Pflanzenschutz lebender Pflanzen und Bäume ist es nicht erwünscht, dass die in Emulsionsform aufgetragenen biologisch aktiven Substanzen tief in die Pflanze eindringen. Vielmehr sollen die Schädlingsbekämpfungsmittel im Gegensatz zu den Holzkonservierungsmitteln mehr oder weniger auf der Oberfläche der Pflanzen verbleiben und nach einer gewissen Zeit abgebaut oder abgewaschen sein, so dass beispielsweise Früchte und dgl. nicht im erheblichen Masse von dem Schädlingsbekämpfungsmittel durchdrungen sein sollen. Daher werden auch trübe Emulsionen, also leicht absetzbare Emulsionen gemäss der britischen Patentschrift 815 510 eingesetzt.

Es ist weiterhin ein Holzschutzmittel bekannt, das aus einem Flüssigkeitskonzentrat hergestellt wird, dessen Wirkbestandteile wasserunlösliche Insektizide und Fungizide sind, die in einem Lösemittel und in Ölen unter Zugabe von Emulgatoren derart aufgelöst sind, dass das fertige Holzschutzmittel als dünnflüssige Emulsion vorliegt (vgl. DE-A 25 18 416). Als Fungizide werden in diesem Holzkonservierungsmittel bevorzugt Caprylate und Naphthenate von Schwermetallen eingesetzt.

Derartige Holzschutzmittel gemäss DE-A 25 18 416 weisen den Nachteil auf, dass bei der Zugabe von Wasser eine milchig-trübe Emulsion entsteht, die nach einer gewissen Zeitdauer abrahmt und somit keine gleichmässige Verteilung der Wirkbestandteile aufweist. In mehreren Fällen konnte ein Bodensatz beobachtet werden. Eine wirkungsvolle Imprägnierung des Holzes ist in diesen Fällen nicht mehr gegeben. Bestimmte Gewichtsmengen der einzusetzenden Bestandteile sind in dieser Patentanmeldung nicht angegeben. Selbst bei der Verwendung einer grossen Emulgatormenge gelingt es jedoch nicht, bei der Rückverdünnung mit Wasser eine optisch klare Emulsion oder Lösung gemäss dieser Patentanmeldung zu erhalten.

Ziel und Aufgabe der vorliegenden Erfindung war es daher, diese Nachteile zu vermeiden und ein Mittel zum Konservieren von Holz zu finden, bei dem das wasserunlösliche Lösungsmittel, das vorzugsweise auf der Basis von Erdölprodukten, Aromaten und dgl. besteht, zu einem erheblichen Prozentsatz durch Wasser ersetzt werden kann, so dass das Lösungsmittel weitgehend eingespart bzw. in seinem Anteil verringert werden kann. Eine Entmischung oder ein Bodensatz sollte bei der Verarbeitung des Holzkonservierungsmittels weitgehend vermieden werden können. Schliesslich sollte das Holzkonservierungsmittel eine gute Wirkung aufweisen. Es sollte in Form von Konzentraten lagerstabil, transportfähig sein und am Einsatzort oder bei der Vertriebsstelle auf die anwendungsfertige Konzentration durch einfache Wasserzugabe verdünnbar sein. Durch die Einhaltung bestimmter Gewichtsmengen und abgestimmter Gewichtsverhältnisse und Zusammensetzungen sollte auch das anwendungsfertige wasserverdünnbare Holzschutzmittel eine möglichst ausreichende Eindringtiefe im Holz erzielen.

Erfindungsgemäss wurde festgestellt, dass ein Holzschutzmittelkonzentrat (und daraus hergestelltes Mittel zum Konservieren von Holz und Holzwerkstoffen) diesen gestellten Aufgaben gerecht wird, bestehend aus einer Emulsion oder Lösung aus I. 5-50, vorzugsweise 10-35 Gew.-Teilen, a) eines schwerflüchtigen wasserunlöslichen, organisch-chemischen Lösungsmittels (gemisches) mit einem Flammpunkt über 30, vorzugsweise über 55 °C, b) eines wasserunlöslichen Insektizids (gemisches) aus einem Carbamat, einem Phosphorsäureester, einem Thiophosphorsäureester, einem Dithiophosphorsäureester oder einem Thionophosphorsäureester, einem chlorierten Kohlenwasserstoff, einem Pyrethroid und/oder aus Endosulfan und/oder eines wasserunlöslichen Fungizids (gemisches) aus einer tetravalenten zinnorganischen Verbindung, einem Ester eines chlorierten Phenoles, einem 1-Trityl-1,2,4-triazol der allgemeinen Formel

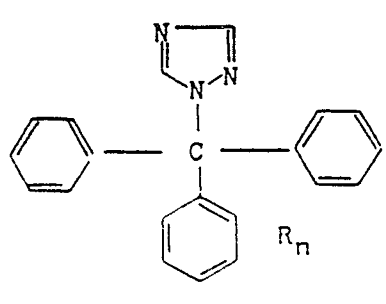

in welcher R für ein Fluor-, Chlor- oder Bromatom, eine Trifluormethyl-, Nitro- oder Cyanogruppe oder eine Alkylgruppe mit bis zu 4 Kohlenstoffatomen und n für die Zahlen 1 oder 2 steht, sowie deren Salze von organischen oder anorganischen Säuren, einem Salz des N-Nitroso-N-cyclohexylhydroxylamins oder (N-Cyclohexyl-diazeniumdioxy)-metallverbindung, vorzugsweise einer Aluminiumverbindung, einem N,N-Dimethyl-N'-phenyl-N'-(fluordichlormethyl-thio)- sulfamid und/oder N,N-Dimethyl-N'-p-tolyl-N'-(dichlorfluormethylthio)-sulfamid, 2,5-Dimethylfuran-3-carbonsäureanilid oder -cyclohexylamid oder N-Cyclohexyl-N-methoxy-2,5-dimethylfuran-3-carbonsäureamid und/oder 1-(p-Chlorphenoxy)-3,3-dimethyl-1-(1,2,4triazolyl)-2-butanon, II. 95-50, vorzugsweise 90-65 Gew.-Teilen, c) eines nichtionogenen Emulgators (gemisches) aus einem äthoxylierten Phenol, einem äthoxylierten Alkyl-, Aryl-, Arylalkylphenol oder einem eine oder mehrere andere Seitengruppen enthaltendem äthoxylierten Phenol, einer äthoxylierten organischen Säure, vorzugsweise einem äthoxylierten Nonylphenol und/oder einer äthoxylierten Fettsäure und d) einem wasserlöslichen kationischen Netzmittel (gemisch) bzw. Lösungsvermittler einer fungizid wirkenden Arylalkylammoniumverbindung, vorzugsweise einer Trialkylarylalkyl-ammoniumverbindung und/oder einem fungizid wirkenden tertiären Aminsalz und ggfs. Wasser.

Das erfindungsgemässe Holzschutzmittelkonzentrat kann je nach dem Einsatzort, Einsatzgebiet und dgl. wasserfrei sein oder eine zusätzliche Wassermenge aufweisen. Aus Gründen der Verringerung der Transportkosten wird ein wasserfreies Holzschutzmittelkonzentrat oder ein nur geringe Wassermengen enthaltendes Holzschutzmittelkonzentrat bevorzugt eingesetzt. Das gemäss der Erfindung zusammengesetzte Holzschutzmittelkonzentrat weist den Vorteil auf, dass daraus durch Verdünnung mit Wasser ein anwendungsfertiges Holzkonservierungsmittel hergestellt werden kann, bei dem das, vorzugsweise aus Mineralöl oder deren Aromatenfraktionen oder mineralölhaltigen Lösungsmittelgemischen wie Testbenzin und/oder Alkylbenzon bestehende wasserunlösliche Lösungsmittel zu einem erheblichen Prozentsatz durch Wasser ersetzbar ist. Dadurch wird somit der Anteil des auf Erdölbasis bestehenden Lösungsmittels weitgehend eingespart oder verringert. Schliesslich wird eine Entmischung oder ein Bodensatz sowohl bei dem Holzschutzmittelkonzentrat als auch bei dem anwendungsfertigen Holzkonservierungsmittel und bei der Verarbeitung desselben weitgehend vermieden.

Als wasserlösliches Netzmittel bzw. Lösungsvermittler oder Netzmittelgemisch bzw. Lösungsvermittlergemisch wird eine fungizid wirkende Arylalkylammoniumverbindung, vorzugsweise eine Trialkylarylalkyl-ammoniumverbindung und/oder ein fungizid wirkendes tertiäres Aminsalz eingesetzt, wobei in der erfindungsgemässen Kombination der Bestandteile und im Rahmen der vorgenannten Gewichtsverhältnisse erreicht wird, dass das Konservierungsmittel eine im Wellenbereich des sichtbaren Lichtes optisch klare Emulsionen darstellt bzw. quasi klar gelöst ist. Als fungizides, ionogenes, kationaktives Netzmittel wird eine Benzyl-dimethyl-($C_{10}$-$C_{16}$) Alkylammoniumverbindung verwendet oder mitverwendet, das bzw. die als Anion Halogen-, Nitrat-, Sulfat- und/oder Acetationen und/oder als fungizid wirkendes tertiäres Aminsalz [Dimethyl-($C_{10}$-$C_{16}$) Alkyl) NH] $+X^-$ und/oder [Methyl-di($C_{10}$-$C_{16}$) Alkyl) NH] $+X^-$, wobei $X^-$ ein Halogen-, Nitrat-, Sulfat- und/oder Acetation bedeutet, enthält. In der vorgenannten Schreibweise ($C_{10}$-$C_{16}$) Alkyl, bedeutet diese Formulierung, dass der Alkylrest eine Kettenlänge von $C_{10}$-$C_{16}$ aufweisen kann, wobei auch solche Verbindungen, die einen Alkylrest bis $C_{18}$ besitzen, in der Mischung mit den Benzyldimethylalkylammoniumverbindungen, die einen Alkylrest von $C_{10}$-$C_{16}$ aufweisen, mischbar und einsetzbar sind.

Durch diese Ausführungsform wird das Holzkonservierungsmittel in seiner Wirksamkeit verbessert.

Nach einer bevorzugten Ausführungsform beträgt das Gewichtsverhältnis des ionogenen, kationaktiven Netzmittels bzw. Netzmittelgemisches zum nichtionogenen Emulgator bzw. Emulgatorgemisch 1 : 20 bis 20 : 1, vorzugsweise 1 : 5 bis 5 : 1.

In dieser Ausführungsform in Kombination mit dem erfindungsgemäss eingesetzten Netzmittel gelingt es, dass selbst bei Wasserverdünnung das Konservierungsmittel eine im Wellenbereich des sichtbaren Lichtes optisch klare Emulsion darstellt bzw. quasi klar gelöst ist.

Nach einer Ausführungsform wird das schwerflüchtige Lösungsmittel teilweise durch einen oder mehrere wasserunlösliche Lösevermittler, vorzugsweise durch ein oder mehrere synthetische Lösungsvermittler und/oder Weichmacher ersetzt. Diese Ausführungsform hat den Vorteil, dass der Gehalt an Lösungsmitteln noch weiter herabgesetzt oder sogar vollständig eingespart werden kann.

Nach einer zweckmässigen Ausführungsform werden (bezogen auf 100 Gew.-% eingesetztes schwerflüchtiges Lösungsmittel) bis zu 90 Gew.-%, vorzugsweise bis zu 40 Gew.-%, des schwerflüchtigen Lösungsmittels oder Lösungsmittelgemisches durch einen als Lösungsvermittler dienenden Weichmacher oder Weichmachergemisch ersetzt. Als Weichmacher sind beispielsweise geeignet :

Alkyl-, Aryl- oder Aralkylphthalate, vorzugsweise Dibutyl-, Dioctyl- und Benzylbutylphthalate, Alkylphosphate bzw. Phosphorsäureester, vorzugsweise Tributylphosphat, Adipate, vorzugsweise Di-(2-äthylhexyl)-adipat, Stearate und Oleate, z. B. Alkylstearate oder Alkyloleate, vorzugsweise Butyloleat, Glycerinester, Glycerinäther oder höhermolekulare Glykoläther.

Als Emulgatoren werden die vorgenannten Emulgatoren oder Emulgatorgemische verwendet. Offensichtlich wirken die Netzmittel-Emulgator-Gemische begünstigend hinsichtlich der Eindringtiefe.

Als Lösungsmittel wird ein schwerflüchtiges Lösungsmittel oder Lösungsmittelgemisch mit einem Flammpunkt über 30 °C, vorzugsweise einem Flammpunkt über 55 °C, eingesetzt.

Als schwerflüchtige ölige oder ölartige Lösungsmittel mit einer Verdunstungszahl über 35 und einem Flammpunkt oberhalb 30 °C, vorzugsweise oberhalb 55 °C, werden wasserunlösliche Lösungsmittel

eingesetzt. Als derartige Lösungsmittel werden entsprechende Mineralöle oder deren Aromatenfraktionen oder mineralölhaltige Lösungsmittelgemische, vorzugsweise Testbenzin und/oder Alkylbenzole usw. verwendet. Durch die Zufügung eines erheblichen Wasseranteiles wird jedoch der Gehalt an derartigen Erdölprodukten im anwendungsfertigen Holzkonservierungsmittel erheblich herabgesetzt.

Zur Herstellung des anwendungsfertigen Mittels zum Konservieren von Holz und Holzwerkstoffen wird dem Konzentrat je 100 Gewichtsteile (Konzentrat berechnet ohne Wasser) zusätzlich 0,1 bis 70 Gew.-Teile, vorzugsweise 1 bis 35 Gew.-Teile, Wasser zugefügt.

Als Insektizide werden die vorgenannten Insektizide eingesetzt, die in dem öligen oder ölartigen Lösungsmittel oder Lösungsmittelgemisch löslich sind.

Als chlorierte insektizide Kohlenwasserstoffe werden bevorzugt Dieldrin (R), Aldrin (R) und Lindan (R) eingesetzt. Von den Pyrethroiden gelangen bevorzugt Allethrin (R), Cyclethrin (R), Furethrin (R), Tetramethrin (R), Resmethrin (R), Permethrin (R), Dekamethrin (R) und Bioresmethrin (R) sowie andere insektizide Wirkstoffe des Pyrethrums zur Anwendung. Von den insektiziden Carbamaten werden bevorzugt o-Isopropoxyphenyl-N-methyl-carbamat und/oder o-sec-Butylphenyl-N-methyl-carbamat eingesetzt.

Als insektizide Thionophosphorsäureester werden bevorzugt insektizide halogenierte oder halogengruppenfreie Thionophosphorsäureester der Formel

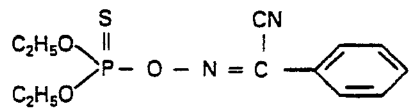

vorzugsweise (Diäthoxy-thiophosphoryloxyimino)-phenyl-acetonitril bzw. O,O-Diäthyl-O-(α-cyanbenzylidenamino) thionophosphat und/oder (Diäthoxythiophosphoryloxyimino)-2-Chlorphenylacetonitril und/oder andere Phosphorsäureester, vorzugsweise Dimethoxy-O-(4-nitro-m-tolyl)-phosphorothioate verwendet.

Als in dem öligen oder ölartigen Lösungsmittel lösliche Carbamate gelangen vorzugsweise Alkoxyphenyl-N-alkylcarbamate der allgemeinen Formel

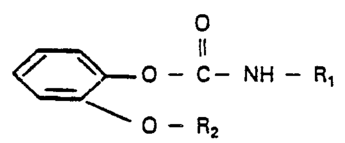

und/oder ein Alkylphenyl-N-alkylcarbamat der allgemeinen Formel

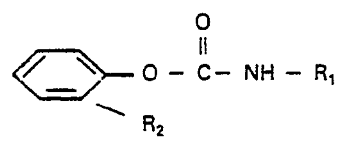

worin jeweils für $R_1$ ein Alkylrest mit 1-4 C-Atomen, vorzugsweise ein Methylrest und für $R_2$ ein Alkylrest mit 1-5 C-Atomen, vorzugsweise ein Alkylrest mit 3 oder 4 C-Atomen steht, zur Anwendung.

Als Fungizide oder Fungizidgemische werden die vorgenannten Fungizide oder Fungizidgemische eingesetzt, die in dem mitverwendeten Lösungsmittel oder Lösungsmittelgemisch löslich sind.

Als öllösliche tetravalente fungizide zinnorganische Verbindungen können beispielsweise eingesetzt werden : Tributyl-zinnbenzoat, Tris-(tributylzinn) phosphat, Bis-(tri-butyl-zinn) oxid.

Für bestimmte Anwendungsgebiete ist es zweckmässig, dem Konzentrat bzw. Holzkonservierungsmittel Korrosionsinhibitoren zuzufügen. Bevorzugt werden Mandelsäure und/oder Benzotriazol als Korrosionsinhibitor in dem Mittel eingesetzt. Ferner kann es zweckmässig sein, Antischaummittel wie Siliconentschäumer oder Alkylphosphate, vorzugsweise Tri-n-butylphosphat zuzusetzen.

Zur Herstellung des anwendungsfertigen Holzschutzmittels wird je ein Teil des Konzentrates mit 3 bis 20 Gew.-Teilen Wasser, vorzugsweise 4 bis 9 Gew.-Teilen Wasser, verdünnt. Durch diesen relativ hohen Verdünnungsgrad gelingt es, somit den Anteil des organischen Lösungsmittels, das bevorzugt auf Erdölbasis, Mineralöl und dgl. besteht, erheblich herabzusetzen und somit diese Erdölprodukte einzusparen. Trotz der Mitverwendung der öligen oder ölartigen Lösungsmittel und der wasserunlöslichen Wirkstoffe wird eine im Wellenbereich des sichtbaren Lichtes optisch klare Emulsion erzielt, so dass auch das anwendungsfertige Holzkonservierungsmittel quasi klar gelöst erscheint.

Nach einer bevorzugten Ausführungsform besteht das aus dem Holzschutzmittelkonzentrat hergestellte anwendungsfertige Mittel zum Konservieren von Holz und Holzwerkstoffen aus 0,35 bis 10 Gew.-%, vorzugsweise 1 bis 7 Gew.-%, eines oder mehrerer in einem schwerflüchtigen Lösungsmittel mit einem Flammpunkt über 30 °C löslicher oder teilweise löslicher Fungizide und/oder 0,3 bis 7 Gew.-%, vorzugsweise 0,5 bis 4 Gew.-%, mindestens eines in einem schwerflüchtigen Lösungsmittel mit einem

Flammpunkt über 35 °C löslichen Insektizides, und 0,5 bis 20 Gew.-%, vorzugsweise 1 bis 16 Gew.-%, eines oder mehrerer in dem schwerflüchtigen Lösungsmittel löslichen Emulgators bzw. Emulgatoren und 20 bis 0,5 Gew.-%, vorzugsweise 16 bis 1 Gew.-%, eines oder mehrerer wasserlöslicher Netzmittel, sowie mehr als 0,5 bis 7,5 Gew.-%, vorzugsweise 1 bis 6 Gew.-%, eines schwerflüchtigen Lösungsmittels mit einem Flammpunkt über 35 °C sowie mehr als 65 Gew.-%, vorzugsweise mehr als 88 Gew.-%, Wasser. Dieses Konservierungsmittel stellt eine im Wellenbereich des sichtbaren Lichtes optisch kalre Emulsion dar bzw. ist quasi klar gelöst.

Die Erfindung betrifft weiterhin ein Verfahren zur Herstellung des Holzschutzmittelkonzentrates und der daraus hergestellten Mittel zum Konservieren von Holz und Holzwerkstoffen. Das Verfahren besteht darin, dass in dem schwerflüchtigen, öligen oder ölartigen Lösungsmittel bzw. Lösungsmittelgemisch die wasserunlöslichen Insektizide oder Insektizidgemische und/oder wasserunlöslichen Fungizide oder Fungizidgemische oder die bei Zimmertemperatur flüssigen Insektizide und/oder flüssigen Fungizide bei Temperaturen von 0 °C bis + 80 °C, vorzugsweise 15 °C bis 45 °C, und bei Drücken von 400 mm Hg bis 850 mm Hg (0,5332 bis 1,1332 bar), vorzugsweise 600 mm Hg bis 790 mm Hg (0,7999 bis 1,0532 bar), solange behandelt werden, bis eine Lösung entsteht und nachfolgend diese Lösung mit einem flüssigen Gemisch bestehend aus mindestens einem nichtionogenen Emulgator oder einem nichtionogenen Emulgatorgemisch für das wasserunlösliche Lösungsmittel oder Lösungsmittelgemisch und mindestens einem wasserlöslichen ionogenen, kationaktiven Netzmittel bzw. Lösungsvermittler oder ionogenen kationaktiven Netzmittelgemischen bzw. Lösungsvermittlergemischen sowie gegebenenfalls Wasser, bei Temperaturen unter 50 °C, vorzugsweise bei Temperaturen zwischen 15 und 45 °C, unter Rühren vereinigt wird.

## Beispiele

1) Beispiel für ein Holzschutzmittelkonzentrat mit insektizider Wirkung :

| | |
|---|---|
| Aromatischer Kohlenwasserstoff (Verdunstungszahl über 35, Flammpunkt 60 °C) als Lösungsmittel (Shellsol AB) | 10,0 Gew.-% |
| γ-Hexachlorcyclohexan (Lindan) als Insektizid | 2,5 Gew.-% |
| Äthoxyliertes Nonylphenol (mit 10 Äthoxygruppen) als Emulgator | 10,0 Gew.-% |
| 50 %ige wässrige Lösung von Dimethylbenzyl-dodecyl-ammonium-chlorid als anionisches Netzmittel | 77,5 Gew.-% |
| | 100,0 Gew.-% |

2) Beispiel für ein Holzschutzmittelkonzentrat mit fungizider Wirkung :

| | |
|---|---|
| Aromatisch-aliphatisches Kohlenwasserstoffgemisch (Verdunstungszahl über 35, Flammpunkt 60 °C) als Lösungsmittel (Shellsol AB in Mischung mit 20 % Testbenzin 60) | 15,0 Gew.-% |
| 2,5-Dimethyl-N-Cyclohexyl-N-Methoxy-3-furansäurecarbamid als Fungizid | 15,0 Gew.-% |
| Äthoxyliertes Nonylphenol (mit 10 Äthoxygruppen) als Emulgator | 50,0 Gew.-% |
| 50 %ige wässrige Lösung von Dimethylbenzyl-dodecyl-ammonium-chlorid als anionisches Netzmittel | 20,0 Gew.-% |
| | 100,0 Gew.-% |

3) Beispiel für ein Holzschutzmittelkonzentrat mit insektizider und fungizider Wirkung :

| | |
|---|---|
| Aromatisch-aliphatisches Kohlenwasserstoffgemisch (Verdunstungszahl über 35, Flammpunkt 60 °C) als Lösungsmittel (Shellsol AB in Mischung mit 15 % Spindelöl) | 15,0 Gew.-% |
| 2,5-Dimethyl-N-Cyclohexyl-N-Methoxy-3-furansäurecarbamid als Fungizid | 15,0 Gew.-% |
| Hexachlorhexahydrodimethano-naphthalin (Aldrin) als Insektizid | 2,5 Gew.-% |
| Äthoxyliertes Nonylphenol (mit 10 Äthoxygruppen) als Emulgator | 47,5 Gew.-% |
| 50 %ige wässrige Lösung von Dimethylbenzyl-dodecyl-ammonium-chlorid als anionisches Netzmittel | 20,0 Gew.-% |
| | 100,0 Gew.-% |

4) Beispiel für ein Holzschutzmittelkonzentrat mit insektizider und fungizider Wirkung :

| | |
|---|---|
| Aromatischer Kohlenwasserstoff (Verdunstungszahl über 35, Flammpunkt 60 °C) als Lösungsmittel (Shellsol AB) | 15,0 Gew.-% |
| 2,5-Dimethyl-N-Cyclohexyl-N-Methoxy-3-furansäurecarbamid als Fungizid | 15,0 Gew.-% |
| γ-Hexachlorcyclohexan (Lindan) als Insektizid | 2,5 Gew.-% |

| | |
|---|---|
| Mischung von äthoxylierten Nonylphenolen mit 6, 10 und 14 Äthoxygruppen im Verhältnis 1 : 1 : 1 als Emulgator | 37,5 Gew.-% |
| 50 %ige wässrige Lösung von Dimethylbenzyl-dodecyl-ammonium-chlorid als anionisches Netzmittel | 30,0 Gew.-% |
| | 100,0 Gew.-% |

5) Beispiel für ein Holzschutzmittelkonzentrat mit insektizider und fungizider Wirkung :

| | |
|---|---|
| Aromatischer Kohlenwasserstoff (Verdunstungszahl über 35, Flammpunkt 60 °C) als Lösungsmittel (Shellsol AB) | 15,0 Gew.-% |
| 2,5-Dimethyl-N-Cyclohexyl-N-Methoxy-3-furansäurecarbamid als Fungizid | 15,0 Gew.-% |
| Hexachlorhexahydrodimethano-naphtahlin (Aldrin) als Insektizid | 2,5 Gew.-% |
| Äthoxyliertes Nonylphenol (mit 10 Äthoxygruppen) als Emulgator | 47,5 Gew.-% |
| Dimethyl-benzyl-cetyl-ammoniumbromid als anionisches Netzmittel (ohne Wassergehalt) | 20,0 Gew.-% |
| | 100,0 Gew.-% |

6) Beispiel für ein Holzschutzmittelkonzentrat mit insektizider und fungizider Wirkung :

| | |
|---|---|
| Aromatischer Kohlenwasserstoff (Verdunstungszahl über 35, Flammpunkt 60 °C) als Lösungsmittel (Shellsol AB) | 15,0 Gew.-% |
| 2,5-Dimethyl-N-Cyclohexyl-N-Methoxy-3-furansäurecarbamid als Fungizid | 15,0 Gew.-% |
| Hexachlorhexahydrodimethano-naphthalin (Aldrin) als Insektizid | 2,5 Gew.-% |
| Äthoxyliertes Nonylphenol (mit 10 Äthoxygruppen) als Emulgator | 47,5 Gew.-% |
| Dimethyl-dichlorbenzyl-dodecylammonium-chlorid als anionisches Netzmittel (ohne Wassergehalt) | 20,0 Gew.-% |
| | 100,0 Gew.-% |

7) Beispiel für ein Holzschutzmittelkonzentrat mit insektizider und fungizider Wirkung :

| | |
|---|---|
| Aromatischer Kohlenwasserstoff (Verdunstungszahl über 35, Flammpunkt 60 °C) als Lösungsmittel (Shellsol AB) | 12,0 Gew.-% |
| Tris (N-Cyclohexyl-diazenium-dioxy)-Aluminium als Fungizid | 6,0 Gew.-% |
| γ-Hexachlorcyclohexan (Lindan) als Insektizid | 2,0 Gew.-% |
| Äthoxyliertes Nonylphenol (mit Äthoxygruppen) als Emulgator | 20,0 Gew.-% |
| 50 %ige wässrige Lösung von Dimethylbenzyl-dodecyl-ammoniumchlorid als anionisches Netzmittel | 60,0 Gew.-% |
| | 100,0 Gew.-% |

8) Beispiel für ein Holzschutzmittelkonzentrat mit insektizider und fungizider Wirkung :

| | |
|---|---|
| Aromatischer Kohlenwasserstoff (Verdunstungszahl über 35, Flammpunkt 60 °C) als Lösungsmittel (Shellsol AB) | 27,0 Gew.-% |
| 1-(4-Chlorphenoxy)-3,3-dimethyl-1-(1,2,4-triazolyl)-2-butanonals Fungizid | 3,0 Gew.-% |
| Thiophosphorsäureester ((Diäthoxythiophosphoryloxyimino)-phenylacetonitril)) als Insektizid | 2,5 Gew.-% |
| Äthoxyliertes Nonylphenol (mit 10 Äthoxygruppen) als Emulgator | 47,5 Gew.-% |
| 50 %ige wässrige Lösung von Dimethyl-benzyl-dodecyl-ammoniumchlorid als anionisches Netzmittel | 20,0 Gew.-% |
| | 100,0 Gew.-% |

9) Beispiel für ein Holzschutzmittelkonzentrat mit insektizider Wirkung :

| | |
|---|---|
| Dibutylphthalat als Lösungsmittel | 30,0 Gew.-% |
| γ-Hexachlorcyclohexan (Lindan) als Insektizid | 2,5 Gew.-% |
| Äthoxyliertes Nonylphenol (mit 10 Äthoxygruppen) als Emulgator | 47,5 Gew.-% |
| 50 %ige wässrige Lösung von Dimethyl-benzyl-dodecyl-ammoniumchlorid als anionisches Netzmittel | 20,0 Gew.-% |
| | 100,0 Gew.-% |

10) Beispiel für ein Holzschutzmittelkonzentrat mit insektizider Wirkung :

| | |
|---|---|
| Butyl-propylenglykoläther (Molgewicht 3500) als Lösungsmittel (Desmophen 3500) | 30,0 Gew.-% |
| γ-Hexachlorcyclohexan (Lindan) als Insektizid | 2,5 Gew.-% |
| Äthoxyliertes Nonylphenol (mit 10 Äthoxygruppen) als Emulgator | 47,5 Gew.-% |
| 50 %ige wässrige Lösung von Dimethylbenzyl-dodecyl-ammoniumchlorid als anionisches Netzmittel | 20,0 Gew.-% |
| | 100,0 Gew.-% |

Die anwendungsfertigen Holzschutzimprägnierlösungen wurden durch Verdünnen mit Wasser hergestellt, indem jeweils 5, 10 oder 20 Gewichtsteile der Holzschutzmittelkonzentrate der Beispiele 1 bis 10 jeweils mit 95, 90 und 80 Gewichtsteilen Wasser vermischt wurden. Diese anwendungsfertigen Mittel sehen quasi klar gelöst aus und zeigen auch bei längerer Lagerung keine Absetzerscheinungen.

**Patentansprüche**

1. Holzschutzmittelkonzentrat bestehend aus einer Emulsion oder Lösung aus

I. 5-50, vorzugsweise 10-35 Gew.-Teilen,

a) eines schwerflüchtigen, wasserunlöslichen, organisch-chemischen Lösungsmittels (gemisches) mit einem Flammpunkt über 30, vorzugsweise über 55 °C,

b) eines wasserunlöslichen Insektizids (gemisches) aus einem Carbamat, einem Phosphorsäureester, einem Thiophosphorsäureester, einem Dithiophosphorsäureester oder einem Thionophosphorsäureester, einem chlorierten Kohlenwasserstoff, einem Pyrethroid und/oder aus Endosulfan und/oder eines wasserunlöslichen Fungizids (gemisches) aus einer tetravalenten zinnorganischen Verbindung, einem Ester eines chlorierten Phenoles, einem 1-Trityl-1,2,4-triazol der allgemeinen Formel

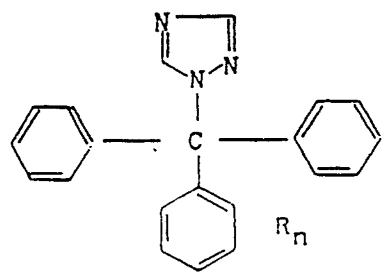

in welcher R für ein Fluor-, Chlor- oder Bromatom, eine Trifluormethyl-, Nitro- oder Cyanogruppe oder eine Alkylgruppe mit bis zu 4 Kohlenstoffatomen und n für die Zahlen 1 oder 2 steht, sowie deren Salze von organischen oder anorganischen Säuren, einem Salz des N-Nitroso-N-cyclohexylhydroxylamins oder (N-Cyclohexyl-diazeniumdioxy)-metallverbindung, vorzugsweise einer Aluminiumverbindung, einem N,N-Dimethyl-N'-phenyl-N'-(fluordichlormethyl-thio)-sulfamid und/oder N,N-Dimethyl-N'-p-tolyl-N'-(dichlorfluormethylthio)-sulfamid, 2,5-Dimethylfuran-3-carbonsäureanilid oder -cyclohexylamid oder N-Cyclohexyl-N-methoxy-2,5-dimethylfuran-3-carbonsäureamid und/oder 1-(p-Chlorphenoxy)-3,3-dimethyl-1-(1,2,4-triazolyl)-2-butanon,

II. 95-50, vorzugsweise 90-65 Gew.-Teilen,

c) eines nichtionogenen Emulgators (gemisches) aus einem äthoxylierten Phenol, einem äthoxylierten Alkyl-, Aryl-, Arylalkylphenol oder einem eine oder mehrere andere Seitengruppen enthaltendem äthoxylierten Phenol, einer äthoxylierten organischen Säure, vorzugsweise einem äthoxylierten Nonylphenol und/oder einer äthoxylierten Fettsäure und

d) einem wasserlöslichen kationischen Netzmittel (gemisch) bzw. Lösungsvermittler einer fungizid wirkenden Arylalkylammoniumverbindung, vorzugsweise einer Trialkylarylalkyl-ammoniumverbindung und/oder einem fungizid wirkenden tertiären Aminsalz

und ggfs. Wasser.

2. Holzschutzmittelkonzentrat nach Anspruch 1, dadurch gekennzeichnet, daß als Netzmittel eine Benzyl-dimethyl-($C_{10}$-$C_{16}$) Alkylammoniumverbindung verwendet wird, das als Anion Halogen-, Nitrat-, Sulfat- und/oder Acetationen und/oder als tertiäres Aminsalz [Dimethyl-($C_{10}$-$C_{16}$) Alkyl) NH] $+X^-$ und/oder [Methyl-di-($C_{10}$-$C_{16}$) Alkyl) NH] $+X^-$, wobei $X^-$ ein Halogen-, Nitrat-, Sulfat- und/oder Acetation bedeutet, enthält.

3. Holzschutzmittelkonzentrat nach Anspruch 1, dadurch gekennzeichnet, daß das Gewichtsverhältnis des Netzmittels (gemisches) zum nichtionogenen Emulgator (gemisch)

1 : 20 bis 20 : 1, vorzugsweise

1 : 5 bis 5 : 1,

beträgt.

4. Holzschutzmittelkonzentrat nach Anspruch 1, dadurch gekennzeichnet, daß das organischchemische schwerflüchtige Lösungsmittel teilweise durch einen oder mehrere wasserunlösliche Lösevermittler, vorzugsweise durch einen oder mehrere Weichmacher, ersetzt ist.

5. Holzschutzmittel nach einem der Ansprüche 1 bis 4, hergestellt aus dem Holzschutzmittelkonzentrat, bestehend aus
0,35 bis 10, vorzugsweise
1 bis 7 Gew.-%,
eines oder mehrerer Fungizide und/oder
0,3 bis 7, vorzugsweise
0,5 bis 4 Gew.-%,
eines oder mehrerer Insektizide, und
0,5 bis 20, vorzugsweise
1 bis 16 Gew.-%,
eines oder mehrerer Emulgatoren und
20 bis 0,5, vorzugsweise
16 bis 1 Gew.-%,
eines oder mehrerer Netzmittel, sowie mehr als
0,5 bis 7,5, vorzugsweise
1 bis 6 Gew.-%,
eines Lösungsmittels sowie aus mehr als
65, vorzugsweise
88 Gew.-%,
Wasser besteht und daß Konservierungsmittel eine optisch klare Emulsion darstellt bzw. klar gelöst ist.

## Claims

1. Wood preservative concentrate consisting of an emulsion or solution of

I. 5-50, preferably 10-35 parts by weight

a) of a not easily volatilized organo-chemical water-insoluble solvent (mixture) with a flashpoint over 30, preferably over 55 °C

b) of a water-insoluble insecticide (mixture) of a carbamate, a phosphoric acid ester, a thiophosphoric acid ester, a dithiophosphoric acid ester or a thionophosphoric acid ester, a chlorinated hydrocarbon, a pyrethroid and/or of endosulfan and/or of a water-insoluble fungicide (mixture) of a tetravalent organotin compound, an ester of a chlorinated phenol, a 1-trityl-1,2,4-triazole of the general formula

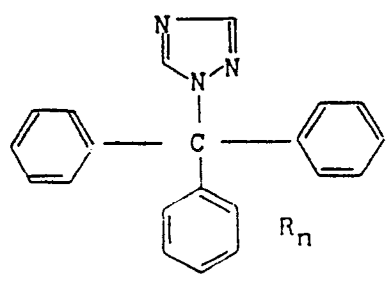

in which R stands for a fluorine, chlorine or bromine atom, a trifluoromethyl-, nitro- or cyano-group, an alkyl group with up to 4 carbon atoms and n has the value 1 or 2, and their salts with organic or inorganic acids, a salt of the N-nitroso-N-cyclohexylhydroxylamine or (N-cyclohexyl-diazeniumdioxy)-metal compound, preferably of an aluminium compound, a N,N-dimethyl-N'-phenyl-N'-(fluorodichloromethyl-thio)-sulphamide and/or N,N-dimethyl-N'-p-tolyl-N'-(dichlorofluoromethylthio)-sulphamide, 2,5-dimethylfuran-3-carboxylic acid anilide or cyclohexylamide or N-cyclohexyl-N-methoxy-2,5-dimethylfuran-3-carboxylic-acid amide and/or 1-(p-chlorophenoxy)-3,3-dimethyl-1-(1,2,4-triazolyl)-2-butanone,

II. 95-50, preferably 90-65 parts by weight,

c) of a non-ionic emulsifier (mixture) of an ethoxylated phenol-, an ethoxylated alkyl-, aryl-, arylalkyl-phenol or an ethoxylated phenol containing one or more other side groups, an ethoxylated organic acid, preferably an ethoxylated nonylphenol and/or an ethoxylated fatty acid and

d) a water-soluble cationic wetting agent (mixture) or solubilising agent of a fungicidally active arylalkylammonium compound, preferably a trialkylarylalkylammonium compound and/or a fungicidally active tertiary amine salt and, if required, water.

2. Wood preservative concentrate according to Claim 1, characterized in that as wetting agent a benzyl-di-methyl-($C_{10}$-$C_{16}$) alkylammonium compound is used, which contains as anion halogen-, nitrate-, sulphate- and/or acetate ions and/or as tertiary amine salt [dimethyl-($C_{10}$-$C_{16}$) alkyl) NH] $+X^-$

and/or [methyl-di ($C_{10}$-$C_{16}$) alkyl) NH] $+X^-$, in which $X^-$ is a halogen-, nitrate-, sulphate-, and/or acetate ion.

3. Wood preservative concentrate according to Claim 1 characterized in that the ratio by weight of the wetting agent (mixture) to the non-ionic emulsifier (mixture) amounts to
1 : 20 to 20 : 1, preferably
1 : 5 to 5 : 1.

4. Wood preservative concentrate according to Claim 1, characterized in that the organo-chemical not easily volatilized solvent is partly replaced by one or more water-insoluble solubilising agents preferably by one or more plasticisers.

5. Wood preservative according to one of Claims 1 to 4, produced from the wood preservative concentrate, consisting of
0.35 to 10, preferably
1 to 7 %-wt,
of one or more fungicides and/or
0.3 to 7, preferably
0.5 to 4 %-wt,
of one or more insecticides, and
0.5 to 20, preferably
1 to 16 %-wt,
of one or more emulsifiers and
20 to 0.5, preferably
16 to 1 %-wt,
of one or more wetting agents, and more than
0.5 to 7.5, preferably
1 to 6 %-wt,
of a solvent and of more than
65, preferably
88 %-wt.,
water, and that the preservative is prepared as an optically clear emulsion or a clear solution.

**Revendications**

1. Concentré d'agent de protection du bois, consistant en une émulsion ou une solution constituée par :

I. 5 à 50, de préférence 10 à 35 parties en poids,

a) d'un solvant (mélangé) organo-chimique, insoluble dans l'eau peu volatil ayant un point éclair supérieur à 30, de préférence supérieur à 55 °C,

b) d'un insecticide (mélangé) insoluble dans l'eau, constitué par un carbamate, un ester de l'acide phosphorique, un ester de l'acide thiophosphorique, un ester de l'acide dithiophosphorique ou un ester de l'acide thionophosphorique, un hydrocarbure chloré, un pyréthroïde et/ou l'endosulfane et/ou d'un fongicide (mélangé) insoluble dans l'eau constitué par un composé organique de l'étain tétravalent, un ester d'un phénol chloré, un 1-trityl-1,2,4-triazol de formule générale

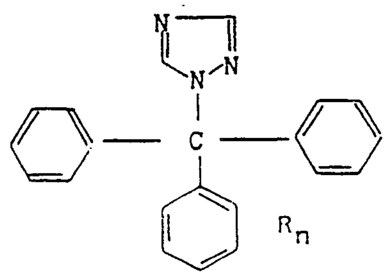

dans laquelle R représente un atome de fluor, de chlore ou de brome, un groupe trifluorométhyle, nitro ou cyano ou un groupe alkyle comportant 1 à 4 atomes de carbone et n représente le nombre 1 ou 2, ainsi que leurs sels dérivés d'acides organiques ou inorganiques, un sel de la N-nitroso-N-cyclohexylhydroxylamine ou le composé métallique N-cyclohexyldiazéniumdioxy, de préférence un composé d'aluminium, un N,N-diméthyl-N'-phényl-N'-(fluorodichlorométhyltio)-sulfamide et/ou un N,N-diméthyl-N'-p-tolyl-N'-(dichlorofluorométhylthio)-sulfamide, l'anilide ou la cyclohexylamide de l'acide 2,5-diméthyl-furanne-3-carboxylique ou l'amide de l'acide N-cyclohexyl-N-méthoxy-2,5 diméthylfuranne-3-carboxylique et/ou la 1-(p-chlorophénoxy)-3,3-diméthyl-1-(1,2,4-triazolyl)-2-butanone,

II. 95 à 50, de préférence 90 à 65 parties en poids,

c) d'un émulsifiant (mélangé) non ionogène constitué par un phénol éthoxylé, un alkylphénol

éthoxylé, un arylphénol éthoxylé, un aralkylphénol éthoxylé ou un phénol éthoxylé comportant un ou plusieurs autres groupes latéraux, un acide organique éthoxylé, de préférence un nonylphénol éthoxylé et/ou d'un acide gras éthoxylé, et

d) d'un agent tensioactif (mélangé) ou tiers solvant cationique hydrosoluble, d'un composé d'arylalkylammonium à activité fongicide, de préférence un composé trialkylarylalkyl-ammonium et/ou d'un sel d'amine tertiaire à activité fongicide et éventuellement de l'eau.

2. Concentré d'agent de protection du bois suivant la revendication 1, caractérisé en ce qu'on utilise en tant qu'agent tensioactif, un composé de benzyl-diméthyl-($C_{10}$-$C_{16}$) alkylammonium qui contient, comme anions, des ions halogènes, nitrates, sulfates et/ou acétates et/ou, comme sel d'amine tertiaire, le [(diméthyl-($C_{10}$-$C_{16}$) alkyl NH] $+X^-$ et/ou le [(méthyl-di($C_{10}$-$C_{16}$) alkyl) NH] $+X^-$, $X^-$ représentant un ion halogène, nitrate, sulfate et/ou acétate.

3. Concentré d'agent de protection du bois suivant la revendication 1, caractérisé en ce que le rapport pondéral de l'agent tensioactif (mélangé) à l'émulsifiant (mélangé) non ionogène est compris entre

1 : 20 et 20 : 1, de préférence
1 : 5 et 5 : 1.

4. Concentré d'agent de protection du bois suivant la revendication 1, caractérisé en ce que le solvant organochimique peu volatil est partiellement remplacé par un ou plusieurs tiers solvants insolubles dans l'eau, de préférence par un ou plusieurs plastifiants.

5. Agent de protection du bois suivant l'une des revendications 1 à 4, fabriqué à partir d'un concentré d'agent de préservation du bois contenant

0,35 à 10, de préférence
1 à 7 % en poids,

d'un ou plusieurs fongicides et/ou

0,3 à 7, de préférence
0,5 à 4 % en poids,

d'un ou plusieurs insecticides, et

0,5 à 20, de préférence
1 à 16 % en poids

d'un ou plusieurs émulsifiants, et

20 à 0,5, de préférence
16 à 1 % en poids,

d'un ou plusieurs agent(s) tensioactif(s), ainsi que plus de

0,5 à 7,5, de préférence
1 à 6 % en poids

d'un solvant ainsi que plus de

65, de préférence
88 % en poids

d'eau, et en ce que l'agent de conservation forme une émulsion optiquement limpide ou est dissous de manière limpide.